Europäisches Patentamt

European Patent Office

Office européen des brevets

(19)

(11) Veröffentlichungsnummer : **0 151 968**
**B1**

(12) **EUROPÄISCHE PATENTSCHRIFT**

(45) Veröffentlichungstag der Patentschrift :
03.01.90

(21) Anmeldenummer : 85100606.4

(22) Anmeldetag : 22.01.85

(51) Int. Cl.$^5$ : **F 02 C 7/06**, **B 64 D 37/22**,
**F 01 D 25/20**, **F 01 M 11/00**,
**F 16 N 19/00**

(54) Schmiermittelversorgungssystem.

(30) Priorität : 15.02.84 DE 3405366

(43) Veröffentlichungstag der Anmeldung :
21.08.85 Patentblatt 85/34

(45) Bekanntmachung des Hinweises auf die Patenterteilung : 03.01.90 Patentblatt 90/01

(84) Benannte Vertragsstaaten :
FR GB IT

(56) Entgegenhaltungen :
GB—A— 2 089 751
GB—A— 2 130 308
US—A— 2 268 653
US—A— 2 888 097
US—A— 2 952 329

(73) Patentinhaber : MTU MOTOREN- UND TURBINEN-
UNION MÜNCHEN GMBH
Dachauer Strasse 665 Postfach 50 06 40
D-8000 München 50 (DE)

(72) Erfinder : Schweikl, Ludwig, Dipl.-Ing.-grad.
Kolpingstrasse 5
D-8052 Moosburg (DE)
Erfinder : Krauss, Olaf
Gerhard-Hauptmannstrasse 15
D-8047 Karlsfeld (DE)

# Beschreibung

Die Erfindung betrifft ein Schmiermittelversorgungssystem für ein Gasturbinentriebwerk gemäß dem Oberbegriff des Patentanspruches 1.

Es sind im Stand der Technik verschiedene Konzepte bekannt geworden, um das Problem der Ölversorgung von Flugtriebwerken unter extremen Flugbedingungen, beispielsweise Rückenflug, extremen Beschleunigungen bzw. Verzögerungen, sicherzustellen. Beispielsweise aus der DE-PS 31 37 947 ist eine Anordnung bekannt geworden, bei der neben dem Hauptölkreislauf mit einer Hauptölsammelstelle (Tank) eine Hilfsölsammelstelle vorgesehen ist. Bei Flugbedingungen, unter denen der Ansaugstutzen in der Hauptölsammelstelle nicht von Öl umspült ist, soll so von der Hilfsölsammelstelle die Schmiermittelversorgung übernommen werden. Nachteilig bei dieser Anordnung wirkt sich neben erheblichem Leitungs- und Pumpenaufwand die Tatsache aus, daß die Hilfsölsammelstelle ausreichend dimensioniert sein muß, um nicht schon nach kurzer Zeit trocken zu laufen. Ferner sind Flugzustände denkbar, bei denen weder von der Haupt- noch von der Hilfsölsammelstelle kontinuierlich Öl angesaugt werden kann.

Aus der US-PS 2 888 097 ist ein Schmiermittelkreislauf eines Flugtriebwerkes bekannt, bei dem im Hauptschmiermittelkreislauf kein Öltank vorgesehen ist. Im Kreislauf befindet sich eine Zentrifugalpumpe, die neben der Förderung des Öls die Aufgabe hat, Luft aus dem Kreislauf zu entfernen. Ein Schmiermitteltank ist zusätzlich angeschlossen, um Leckverluste sowie erhöhten Ölbedarf bei Beschleunigungen des Triebwerks auszugleichen.

Aus der GB-A 2 089 751 ist eine gattungsgemäße Schmiermittelversorgungseinrichtung bekannt geworden, bei der Öl in einem zylindrischen Tank in Rotation gehalten wird. Dies hat den Vorteil, daß unter beliebigen Flugbedingungen immer eine ausreichende Ölschicht am Tankumfang vorhanden ist, und hierdurch die Schmiermittelversorgung des Triebwerkes gewährleistet bleibt. Die Entlüftung des Kreislaufes geschieht dadurch, daß im Innenbereich des zylindrischen Tankes Öffnungen vorgesehen sind, durch welche Luft entweichen kann. Die Erzeugung der Schmiermittelrotation wird dadurch erreicht, daß ein Teil des Ölstromes hinter der Druckölpumpe und der Umgehung des Verbrauchers direkt eine als Hydraulikmotor geschalteten Beschaufelung im Bereich des Tankes zugeführt wird. Nachteilig bei dieser Anordnung ist einerseits, daß ein Teil des in der Druckölpumpe geförderten Schmiermittels nicht dem Triebwerk zugeführt wird, und so elektrische Arbeit zur Schmiermittelrotation erforderlich ist. Dadurch wird der Wirkungsgrad des Gesamtsystemes herabgesetzt. Ferner ist die Luftabscheidung unvollständig, bzw. Spritzer und Ölschaum können eine Verunreinigung des über Bord geförderten Luftstromes bewirken. Neben relativ hohen Leckverlusten ist so eine Verschmutzung der Umwelt unvermeidbar.

Hiervon ausgehend ist es Aufgabe der vorliegenden Erfindung, ein Schmiermittelversorgungssystem für ein Flugtriebwerk zu schaffen, daß bei beliebigen Flugmanövern eine Schmiermittelversorgung der Verbraucher gewährleistet, wobei eine verbesserte Energieausnutzung der dem zurückströmenden Schmiermittel noch inne wohnenden Energie möglich wird und die Luftabscheidung weiter verbessert wird.

Erfindungsgemäß wird diese Aufgabe dadurch gelöst, daß der Abscheider für Luft der Zentrifugalpumpe zugeordnet ist, beide räumlich getrennt vom Tank in Strömungsrichtung hinter dem Verbraucher angeordnet sind, und das im Tank befindliche Schmiermittel durch den mittels der Zentrifugalpumpe zugeführten Schmiermittelstrom in Rotation gehalten wird.

Vorteilhafte Weiterbildungen der Erfindung lassen sich aus den Unteransprüchen entnehmen.

Der wesentliche Vorteil der erfindungsgemäßen Anordnung ist darin zu sehen, daß sich ein hoher Abscheidegrad dadurch ergibt, daß der Abscheider für Luft vom Tank getrennt untergebracht ist. Gleichzeitig wird die durch die Zentrifugalpumpe dem Öl zugeführte Zentrifugalbeschleunigung zur Erzeugung eines ausgangsseitigen Druckes und zum Antrieb des rotierenden Schmiermittels im Tank verwendet.

Ferner von Vorteil ist, daß unter Wahrung aller bisher erreichten Vorteile wie Schmiermittelversorgung eines Gasturbinentriebwerks auch in kritischen Fluglagen, sicherer, blasenfreier Zufuhr des Schmiermittels zu den Verbrauchern wie Lagern, und ohne daß Öl durch eine Packung hindurch muß, eine Energierückgewinnung aus dem Rücklauföl erfindungsgemäß erfolgt. Letztere führt zu der Einsparung nötiger Hilfsenergien, gegebenenfalls zu vereinfachten Hilfsantrieben bzw. Hilfsaggregaten oder wenigstens zu deren kleineren Dimensionierung, was wiederum den Vorteil der Gewichtsersparnis mit sich bringt.

Die Druckpumpe zur Zufuhr von Öl zum Verbraucher kann den tatsächlichen Erfordernissen angepaßt werden, und die dem Öl in der Zentrifugalpumpe zugeführte Energie wird zweckmäßig ausgenutzt. Der Abscheider bildet zusammen mit der Zentrifugalpumpe eine bauliche Einheit.

In Vorteilhafter Weiterbildung der Erfindung ist zur Erzeugung der Rotation des Schmiermittels der Vorratstank drehbar gelagert und weist eine vom einströmenden Schmiermittel beaufschlagte Beschaufelung auf. Hierdurch ist auch eine wirkungsvolle Erzeugung und Aufrechterhaltung der Schmiermittelrotation möglich. Ferner werden dadurch Reibungsverluste zwischen den rotierenden Schmiermittel und der Tankwandung vermieden.

In alternativer Ausbildung der Erfindung ist zur Erzeugung der Rotation des Schmiermittels im Vorratstank eine drehbar gelagerte Welle vorgesehen, an der eine vom einströmenden Schmiermittel beaufschlagte Beschaufelung angebracht ist. Diese Ausführung hat den Vorteil, daß die konstruktive Einfachheit eines starren Tankes erhalten bleibt und trotzdem das Schmiermittel mit hohem Wirkungsgrad in Rotation gehalten werden kann.

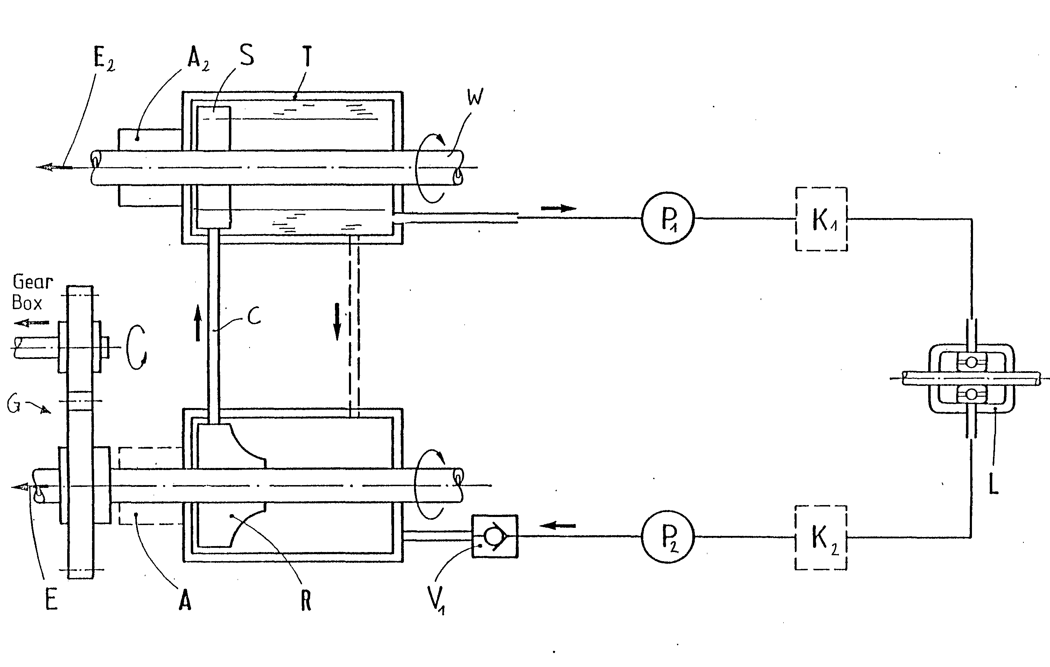

Ausführungsbeispiele der Erfindung sind in der beigefügten Zeichnung rein schematisch dargestellt und in der nachfolgenden Beschreibung niedergelegt.

Die Flußrichtungen sind mit Pfeilen angedeutet, ebenso sind mit Pfeilen die Drehrichtungen von Wellen angedeutet. In allen Figuren sind gleiche Bezugszeichen für gleiche Teile verwendet.

Die Figur zeigt einen Schmiermittelkreislauf eines Gasturbinenflugtriebwerkes, durch den ein Verbraucher L mit Schmiermittel zu versorgen ist. Das Schmiermittel rotiert im Tank T und wird mittels der Pumpe P1 und dem Kühler K1 dem Verbraucher L zugeführt. Von dem Verbraucher L gelangt das Schmiermittel über den Kühler K2 und die Saugpumpe P2 zur Zentrifugalpumpe R. In der Zentrifugalpumpe R wird die Luft vom Öl getrennt und über den Abscheider A der Entlüftungsleitung E zugeführt. Von dort gelangt die Luft ins Freie. Der Ölstrom gelangt über die Ölleitung C auf eine an der Welle W angebrachte Beschaufelung S im Inneren des Tankes T. Diese als Hydromotor geschaltete Beschaufelung S reißt dabei das im Tank T befindliche Öl mit und bildet so an der zylindrischen Außenwand des Tankes T eine rotierende Ölschicht aus. Ein weiterer Ölabscheider A2 kann in Zusammenwirkung mit einer Entlüftungsleitung E2 zusätzlich Luft aus dem Tank T entfernen.

Die Zentrifugalpumpe R wird von einem nicht dargestellten Motor über das Getriebe G angetrieben, wobei dem Schmiermittel Energie zugeführt wird. Diese Energie gibt das geförderte Schmiermittel nach Passieren der Ölleitung C über die Beschaufelung S an das im Tank T befindliche Schmiermittel ab.

## Patentansprüche

1. Schmiermittelversorgungssystem für ein Gasturbinentriebwerk, wobei ein zur Aufrechterhaltung der Schmiermittelversorgung in kritischen Fluglagen in einem Tank (T) rotierendes Schmiermittel aus diesem Tank (T) über eine Druckpumpe einem Verbraucher (L) des Triebwerkes zuführbar und von dort in den Tank (T) zurückführbar ist und das System zwischen Verbraucher (L) und Tank (T) eine Saugpumpe (P2) und Mittel zum Abscheiden von Luft unter der Wirkung von Zentrifugalkräften in Form eines aus einem Abscheider (A) und einer Zentrifugalpumpe (R) bestehenden Zentrifugalabscheiders aufweist, und der Schmiermitteltank (T), Mittel zum Kühlen ($K_1$, $K_2$), die Zentrifugalpumpe (R) und der Luftabscheider (A) hintereinander geschaltet sind, dadurch gekennzeichnet, daß der Luftabscheider (A) der Zentrifugalpumpe (R) zugeordnet ist, beide räumlich getrennt vom Tank (T) in Strömungsrichtung hinter dem Verbraucher (L) angeordnet sind, und das im Tank (T) befindliche Schmiermittel durch den mittels der Zentrifugalpumpe (R) zugeführten Schmiermittelstrom in Rotation gehalten wird.

2. Schmiermittelversorgungssystem nach Anspruch 1, dadurch gekennzeichnet, daß zur Erzeugung der Rotation des Schmiermittels der Vorratstank (T) drehbar gelagert ist und darin eine vom einströmenden Schmiermittel beaufschlagte Beschaufelung angebracht ist.

3. Schmiermittelversorgungssystem nach Anspruch 1, dadurch gekennzeichnet, daß zur Erzeugung der Rotation des Schmiermittels im Vorratstank (T) eine drehbar gelagerte Welle (W) vorgesehen ist, an der eine vom einströmenden Schmiermittel beaufschlagte Beschaufelung (S) angebracht ist.

4. Schmiermittelversorgungssystem nach einem der Ansprüche 1 bis 3, dadurch gekennzeichnet, daß die Fördermenge des in den Vorratstank (T) strömenden Schmiermittels durch Zu- bzw. Abfuhrorgane ($V_1$) wie Ventile, Drosseln steuerbar ist.

## Claims

1. Lubricant supply system for a gas turbine propulsion unit, in which, for maintaining the supply of lubricant in critical flight situations, a lubricant rotating in a tank (T) can be fed from a tank (T) via a pressure pump to consumer (L) of the propulsion unit and can be fed back from there into the tank (T), the system comprising between the consumer (L) and the tank (T) a suction pump (P2) and means for separating air under the effect of centrifugal forces, in the force of a centrifugal separator consisting of a separator (A) and a centrifugal pump (R), the lubricant tank (T), means of cooling (K1, K2), a centrifugal pump (R) and air separator (A) being connected one after another, characterised in that the air separator (A) is associated with the centrifugal pump (R), both being spatially separated from the tank (T) in the direction of flow downstream of the consumer (L), the lubricant contained in the tank (T) being maintained in rotation by the stream of lubricant fed by means of the centrifugal pump (R).

2. Lubricant supply system according to Claim 1, characterised in that to create the rotation of the lubricant the storage tank (T) is rotatably mounted, a system of vanes being disposed therein which is subject to the action of the incoming lubricant.

3. A lubricant supply system according to Claim 1, characterised in that to create the rotation of the lubricant in the storage tank (T), a rotatably mounted shaft (W) is provided on which is mounted a system of vanes (S) which is subject to the effect of the incoming lubricant.

4. A lubricant supply system according to one of Claims 1 to 3, characterised in that the quantity of lubricant flowing into the storage tank (T) can be controlled by supply or discharge means (V₁, V₂) such as valves or throttle means.

## Revendications

1. Système d'alimentation en lubrifiant pour un propulseur à turbines à gaz, système dans lequel, pour maintenir l'alimentation en lubrifiant dans des positions de vols critiques, un lubrifiant mis en rotation dans un réservoir (T) est susceptible d'être amené à partir de ce réservoir (T) par l'intermédiaire d'une pompe de refoulement à un dispositif utilisateur (L) du propulseur et est susceptible d'être ramené à partir de là dans le réservoir (T), le système comportant entre le dispositif utilisateur (L) et le réservoir (T) une pompe aspirante (P2) et des moyens pour la séparation de l'air sous l'effet de forces centrifuges, ces moyens revêtant la forme d'un séparateur centrifuge constitué d'un séparateur (A) et d'une pompe centrifuge (R), le réservoir de lubrifiant (T), des moyens de refroidissement (K1, K2), une pompe centrifuge (R) et un séparateur d'air (A) étant branchés l'un derrière l'autre, système caractérisé en ce que le séparateur d'air (A) est associé à la pompe centrifuge (R), tous deux étant disposés derrière le dispositif utilisateur (L) dans la direction d'écoulement en étant séparés spatialement du réservoir (T), tandis que le lubrifiant se trouvant dans le réservoir (T) est maintenu en rotation par l'écoulement de lubrifiant amené par la pompe centrifuge (R).

2. Système d'alimentation en lubrifiant selon la revendication 1, caractérisé en ce que, pour obtenir la rotation du lubrifiant, le réservoir (T) est monté de façon à pouvoir tourner et qu'à l'intérieur de ce réservoir est installé un jeu d'ailettes sollicitées par l'écoulement de lubrifiant pénétrant dans ce réservoir.

3. Système d'alimentation en lubrifiant selon la revendication 1, caractérisé en ce que pour obtenir la rotation du lubrifiant dans le réservoir (T), il est prévu un arbre (W) monté de façon à pouvoir tourner et sur lequel est installé un jeu d'ailettes sollicitées par l'écoulement du lubrifiant pénétrant dans le réservoir.

4. Système d'alimentation en lubrifiant selon une des revendications 1 à 3, caractérisé en ce que la quantité de lubrifiant refoulée dans le réservoir (T) est susceptible d'être contrôlée par des organes d'amenée ou d'évacuation (V₁, ou V₂) tels que des soupapes ou des étranglements.